# EUROPÄISCHE PATENTSCHRIFT

(11) **EP 3 956 718 B1**
(45) Veröffentlichungstag und Bekanntmachung des Hinweises auf die Patenterteilung: **06.08.2025**
(21) Anmeldenummer: 20719955.5
(22) Anmeldetag: 06.04.2020
(51) Int. Cl.: G02B 27/09, G02B 27/28, B23K 26/067, B23K 26/073, B23K 26/06, B23K 26/0622

(54) **BEARBEITUNGSOPTIK, LASERBEARBEITUNGSVORRICHTUNG UND VERFAHREN ZUR LASERBEARBEITUNG**
MACHINING OPTICAL SYSTEM, LASER MACHINING DEVICE, AND METHOD FOR LASER MACHINING
OPTIQUE D'USINAGE, DISPOSITIF D'USINAGE AU LASER ET PROCÉDÉ D'USINAGE AU LASER

(30) Priorität: 15.04.2019 DE 102019205394
(43) Veröffentlichungstag der Anmeldung: 23.02.2022
(73) Patentinhaber: TRUMPF Laser- und Systemtechnik SE, 71254 Ditzingen (DE)
(72) Erfinder: KUMKAR, Malte, 99425 Weimar (DE); KLEINER, Jonas, 71229 Leonberg (DE); GROSSMANN, Daniel, 78713 Schramberg (DE); FLAMM, Daniel, 70806 Kornwestheim (DE)
(74) Vertreter: Trumpf Patentabteilung
(86) Internationale Anmeldenummer: PCT/EP2020/059716
(87) Internationale Veröffentlichungsnummer: WO 2020/212175

(56) Entgegenhaltungen:
- EP-A1- 1 721 695
- WO-A1-2018/020145
- WO-A1-2018/162356
- DE-A1- 102011 116 833

## Beschreibung

Die vorliegende Erfindung betrifft eine Bearbeitungsoptik zur Werkstückbearbeitung entsprechend Anspruch 1. Die Erfindung betrifft auch eine Laserbearbeitungsvorrichtung mit einer solchen Bearbeitungsoptik entsprechend Anspruch 16. sowie ein Verfahren zum Laserbearbeiten eines Werkstücks mittels einer Bearbeitungsoptik entsprechend Anspruch 17.

Bei der Laserbearbeitung eines Werkstücks, insbesondere beim Laserabtragen, Laserschneiden, Oberflächenstrukturieren, Laserschweißen, Laserbohren, etc. ist es günstig, einen Eingangslaserstrahl in mehrere Teilstrahlen aufzuteilen, die an unterschiedlichen Orten auf das Werkstück auftreffen bzw. fokussiert werden. Die Aufteilung kann an einem Polarisator-Element erfolgen, wobei aus einem Eingangslaserstrahl zwei senkrecht zueinander polarisierte Teilstrahlen als Ausgangslaserstrahlen gebildet werden. Es ist möglich, dass mehrere Eingangslaserstrahlen, die räumlich versetzt sind, auf das Polarisator-Element auftreffen. Jeder der Eingangslaserstahlen wird in diesem Fall in ein Paar von senkrecht zueinander polarisierten Teilstrahlen aufgeteilt.

In der WO2015/128833A1 ist ein Laser-Schneidkopf beschrieben, der ein im Strahlengang eines Laserstrahls angeordnetes polarisierendes Strahlversatzelement zur Erzeugung zweier linear polarisierter Teilstrahlen aufweist. Das polarisierende Strahlversatzelement ist in einem divergenten oder in einem konvergenten Strahlengang-Abschnitt des Laserstrahls angeordnet. Das Strahlversatzelement kann aus einem doppelbrechenden Material gebildet sein. Bei der Verwendung einer fokussierenden, vergrößernden Optik und einem im Strahlengang hinter der fokussierenden Optik angeordneten Strahlversatzelement kann es zu einer teilweisen Überlagerung der beiden Teilstrahlen in der Fokusebene kommen.

Aus der WO2015/5114032 A1 ist eine Laserbearbeitungsvorrichtung zur Werkstückbearbeitung bekannt geworden, die eine Bearbeitungsoptik aufweist, bei der ein Eingangslaserstrahl an einem Polarisator in zwei senkrecht polarisierte Teilstrahlen aufgeteilt wird. Die Bearbeitungsoptik weist eine größere Weglänge für den zweiten Teilstrahl als für den ersten Teilstrahl auf, wodurch der zweite Teilstrahl eine längere Laufzeit als der erste Teilstrahl aufweist. Der zweite Teilstrahl wird in mindestens einer geometrischen Strahleigenschaft gegenüber dem ersten Teilstrahl verändert. Der veränderte zweite Teilstrahl wird dem ersten Teilstrahl derart überlagert, dass beide Teilstrahlen einen gemeinsamen Ausgangslaserstrahl bilden.

In der WO2018/020145A1 ist ein Verfahren zum Schneiden von dielektrischem oder Halbleiter-Material mittels eines gepulsten Lasers beschrieben, bei dem ein Laserstrahl in zwei Teilstrahlen aufgeteilt wird, die in zwei räumlich getrennten, um einen Abstand zueinander versetzten Zonen auf das Material treffen. Der Abstand wird auf einen Wert unterhalb eines Schwellwerts eingestellt, um einen geradlinigen Mikro-Bruch in dem Material zu erzeugen, der in einer vorgegebenen Richtung zwischen den beiden zueinander versetzten Zonen verläuft. An den beiden Teilstrahlen kann eine Strahlformung zur Erzeugung einer Ortsverteilung auf dem Material in Form eines Bessel-Strahls durchgeführt werden.

Die WO2016/089799A1 beschreibt ein System zum Laserschneiden mindestens eines Glas-Artikels mittels einer gepulsten Laser-Baugruppe, die ein strahlformendes optisches Element zur Umwandlung eines Eingangsstrahls in einen quasi-nichtbeugenden Strahl, beispielsweise einen Bessel-Strahl, umfasst. Die Laser-Baugruppe umfasst auch ein Strahl-Transformations-Element zur Umwandlung des quasi-nichtbeugenden Strahls in mehrere zwischen 1 µm und 500 µm voneinander beabstandete Teilstrahlen. Weitere Systeme zum Laserschneiden sind aus EP1721695 und WO2018/162356 bekannt. WO2018/020145 offenbart des Weiteren ein System zum Laserschneiden mit einem quasi-nichtbeugenden Laserstrahl.

### Aufgabe der Erfindung

Der Erfindung liegt die Aufgabe zugrunde, eine Bearbeitungsoptik, eine Laserbearbeitungsvorrichtung damit sowie ein Verfahren zum Laserbearbeiten bereitzustellen, bei denen unerwünschte Interferenz-Effekte bei der Werkstückbearbeitung vermieden werden können.

### Gegenstand der Erfindung

Diese Aufgabe wird erfindungsgemäß durch eine Bearbeitungsoptik der eingangs genannten Art gelöst, bei der die Bearbeitungsoptik zur Erzeugung von zumindest teilweise überlappenden Fokuszonen der senkrecht zueinander polarisierten Teilstrahlen, bevorzugt in der Fokusebene, ausgebildet ist.

Im Sinne dieser Anmeldung werden unter senkrecht zueinander polarisierten Teilstrahlen linear polarisierte Teilstrahlen verstanden, deren Polarisationsrichtungen und einem Winkel von 90° zueinander ausgerichtet sind. Unter senkrecht zueinander polarisierten Teilstrahlen werden aber auch zirkular polarisierte Teilstrahlen mit entgegengesetztem Drehsinn verstanden, d.h. zwei links bzw. rechts zirkular polarisierte Teilstrahlen. Die Umwandlung von linear polarisierten Teilstrahlen mit senkrecht zueinander ausgerichteten Polarisationsrichtungen in zirkular polarisierte Teilstrahlen mit entgegengesetztem Drehsinn kann z.B. mit Hilfe einer geeignet orientierten Verzögerungsplatte (λ/4-Platte) erfolgen.

Wird ein Laserstrahl, der z.B. von einem Single-Mode Laser erzeugt wird und ein Gauß-förmiges Strahlprofil aufweist, in zwei oder mehr Teilstrahlen aufgeteilt und die Teilstrahlen werden zumindest teilweise überlagert, kann dies zu unerwünschten Interferenz-Effekten führen, wenn die Teilstrahlen die gleiche oder eine ähnliche Polarisation aufweisen. Daher können bei der Fokussierung der Teilstrahlen die Fokuszonen bzw. die Fokusquerschnitte nicht beliebig nahe beieinander liegen, so dass die Teilstrahlen in der Regel an voneinander beabstandeten Fokuszonen auf dem Werkstück fokussiert werden.

Bei der Nutzung von Teilstrahlen, die senkrecht aufeinander stehende Polarisationszustände aufweisen, kommt es bei der (teilweisen) Überlagerung nicht zu Interferenz-Effekten der Laserstrahlung aus unterschiedlichen Orts- oder Winkelbereichen, sofern der Polarisationszustand der jeweiligen Teilstrahlen einheitlich über den gesamten relevanten Strahlquerschnitt bzw. die jeweilige Fokuszone ist. Die Polarisation eines jeweiligen Teilstrahls sollte daher ortsabhängig über den Strahlquerschnitt bzw. über die Fokuszone möglichst wenig variieren. In diesem Fall können die Fokuszonen beliebig nahe aneinander liegen, sich teilweise oder ggf. vollständig überlappen und sogar homogene Fokuszonen ausbilden, und zwar sowohl transversal, d.h. senkrecht zur Ausbreitungsrichtung der Teilstrahlen, als auch longitudinal, d.h. in Ausbreitungsrichtung der Teilstrahlen.

Alternativ zur Nutzung von ganz oder teilweise überlappenden Teilstrahlen, die senkrecht aufeinander stehende Polarisationszustände aufweisen, können auch ganz oder teilweise überlappende Teilstrahlen genutzt werden, die einen Zeitversatz aufweisen, der so groß ist, dass praktisch keine Interferenz-Effekte auftreten. Dies ist typischerweise der Fall, wenn der Zeitversatz mindestens der Größenordnung der Pulsdauer oder der Größenordnung der Kohärenzlänge entspricht. Minimal wird hierbei in der Regel 50% des jeweils kleineren der beiden Werte (Pulsdauer bzw. Kohärenzlänge) als Zeitversatz gewählt.

Auch wenn in der nachfolgenden Beschreibung nur ein doppelbrechendes Polarisator-Element beschrieben ist, können grundsätzlich auch zwei oder mehr doppelbrechende Polarisator-Elemente in der Bearbeitungsoptik vorgesehen sein. Beispielsweise kann in diesem Fall der von einer Laserquelle erzeugte, in die Bearbeitungsoptik eintretende Laserstrahl in zwei oder mehr Teilstrahlen aufgeteilt werden, die jeweils einen Eingangslaserstrahl für ein zugehöriges doppelbrechendes Polarisator-Element darstellen, oder es können die Laserstrahlen mehrerer Laserquellen als Eingangslaserstrahlen verwendet werden.

Für den Fall, dass die Teilstrahlen ein quasi-nichtbeugendes Strahlprofil, z.B. ein Bessel-artiges Strahlprofil, aufweisen, werden diese bei der Fokussierung mittels der Fokussieroptik auf ein im Vergleich zum Durchmesser der Fokuszone (z.B. in der Größenordnung von Mikrometern) vergleichsweise langes Fokusvolumen (z.B. in der Größenordnung von Millimetern) fokussiert. Dennoch wird in der vorliegenden Anmeldung zur Vereinfachung auch bei derartigen Strahlprofilen von einer Fokussierung in eine Fokusebene gesprochen. Die Fokusebene bzw. die weiter unten beschriebenen Ebenen sind durch die Eigenschaften der jeweiligen Optiken vorgegeben (unabhängig von der Art des Strahlprofils).

Bei einer Ausführungsform ist das doppelbrechende Polarisator-Element entweder zur Erzeugung eines Ortsversatzes oder zur Erzeugung eines Winkelversatzes oder zur Erzeugung einer Kombination eines Winkelversatzes und eines Ortsversatzes zwischen den zwei senkrecht zueinander polarisierten Teilstrahlen ausgebildet. Mit Hilfe eines doppelbrechenden Polarisator-Elements, typischerweise in Form eines doppelbrechenden Kristalls, wird bei geeigneter Polarisation des Eingangslaserstrahls, z.B. bei einem unpolarisierten Eingangslaserstrahl bzw. bei einem Eingangslaserstrahl mit undefinierter oder zirkularer Polarisation, das gezielte räumliche Aufteilen des Eingangslaserstrahls in seine Polarisationsbestandteile ermöglicht. Abhängig von der Ausgestaltung des doppelbrechenden Polarisator-Elements kann ein wohldefinierter, reiner Ortsversatz, ein wohldefinierter, reiner Winkelversatz oder eine Kombination aus Ortsversatz und Winkelversatz erzeugt werden.

Zur Erzeugung des Ortsversatzes (ohne Winkelversatz) kann das doppelbrechende Polarisator-Element beispielsweise parallel ausgerichtete, in der Regel plane Strahleintritts- und Strahlaustrittsflächen aufweisen. Die optische Achse des doppelbrechenden Kristalls ist in diesem Fall typischerweise unter einem Winkel zur Strahleintrittsfläche ausgerichtet. Trifft der Eingangslaserstrahl senkrecht auf die Strahleintrittsfläche, wird an der Strahlaustrittsfläche ein reiner Ortsversatz erzeugt.

Zur Erzeugung des Winkelversatzes (ohne Ortsversatz) kann das doppelbrechende Polarisator-Element eine Strahlaustrittsfläche aufweisen, die unter einem Winkel zur Strahleintrittsfläche geneigt ist. Die optische Achse des doppelbrechenden Kristalls ist in diesem Fall typischerweise parallel zur Strahleintrittsfläche ausgerichtet. Die beiden Teilstrahlen treten in diesem Fall an der Strahlaustrittsfläche an demselben Ort und mit einem definierten Winkelversatz aus dem doppelbrechenden Kristall aus.

Die Anordnung des doppelbrechenden Polarisator-Elements im Strahlengang der Bearbeitungsoptik hängt neben der Art der Laserbearbeitung davon ab, ob ein reiner Ortsversatz oder ein reiner Winkelversatz erzeugt werden soll. Die Erzeugung einer Kombination aus Ortsversatz und Winkelversatz ist für die vorliegenden Anwendungen in der Regel eher ungünstig, bei bestimmten Anwendungen kann aber eine Kombination von Orts- und Winkelversatz in der Fokusebene akzeptiert werden. Auch kann eine solche Kombination von Orts- und Winkelversatz bei einer Drehung des Polarisator-Elements günstig sein (s.u.).

Zur Erzeugung einer Kombination aus Orts- und Winkelversatz kann beispielsweise ein Polarisator-Element in Form eines herkömmlichen Prismen-Polarisators verwendet werden, beispielsweise ein Nicolsches Prisma, ein Rochon-Prisma, ein Glan-Thompson-Prisma oder eine andere Art von Prismen-Polarisator (vgl. z.B. "https://de.wikipedia.org/wiki/Polarisator" oder "https://www.b-halle.de/produkte/Polarisatoren.html").

Bei einer Weiterbildung ist das doppelbrechende Polarisator-Element zur Erzeugung eines Winkelversatzes ausgebildet und in einer zur Fokusebene optisch konjugierten Ebene angeordnet. Unter einer zur Fokusebene optisch konjugierten Ebene wird eine Ebene verstanden, die durch eine Fourier-Transformation, d.h. eine Winkel-zu-Orts-Transformation, mit der Fokusebene korreliert ist. Geht man davon aus, dass die Fokussieroptik eine (effektive) bildseitige Brennweite f₂ aufweist, ist die konjugierte Ebene mit dem Polarisator-Element, welches zur Erzeugung eines Winkelversatzes ausgebildet ist, typischerweise im Abstand der objektseitigen Brennweite f₁ der Fokussieroptik angeordnet. Für den Spezialfall, dass f₁ = f₂ = f gilt, ist das doppelbrechende Polarisator-Element im Abstand 2 f (bzw. allgemein 2 f + N x 4 f, N größer gleich 0, N ganzzahlig) von der Fokusebene angeordnet. Nachfolgend wird vereinfachend von einem 2f-Setup gesprochen, auch wenn die Bedingung f₁ = f₂ = f nicht erfüllt ist.

Bei einer alternativen Ausführungsform ist das doppelbrechende Polarisator-Element zur Erzeugung eines Ortsversatzes ausgebildet und im Strahlengang vor einer weiteren, bevorzugt kollimierenden Optik angeordnet, wobei die Bearbeitungsoptik ausgebildet ist, den Ortsversatz zwischen den an dem Polarisator-Element senkrecht zueinander polarisierten Teilstrahlen in die Fokusebene abzubilden. In diesem Fall kann das doppelbrechende Polarisator-Element in einer der Fokusebene entsprechenden Ebene vor der weiteren Optik angeordnet sein. Eine solche Ebene ist beispielsweise über zwei Winkel-zu-Orts-Transformationen mit der Fokusebene korreliert. Geht man davon aus, dass die Fokussieroptik eine (effektive) Brennweite von f aufweist, kann die der Fokusebene entsprechende Ebene mit dem doppelbrechenden Polarisator-Element in einem Spezialfall, bei dem für die Kollimierung und die Fokussierung gleiche Brennweiten verwendet werden, in einem Abstand von 4 f (bzw. allgemein von 4 f + N x 4 f, N größer gleich Null, N ganzzahlig) von der Fokusebene angeordnet werden. Nachfolgend wird vereinfachend von einem 4f-Setup gesprochen, auch wenn die verwendeten optischen Elemente nicht zwingend eine einheitliche Brennweite f aufweisen. Für den Fall, dass das doppelbrechende Polarisator-Element im (im Wesentlichen) kollimierten Strahlengang angeordnet ist, kommt es auf die genaue Anordnung des Polarisator-Elements in einem vorgegebenen Abstand von der Fokusebene in der Regel nicht an, wesentlich ist nur eine (weitgehende) Orts-zu-Orts-Transformation, d.h. eine Abbildung zwischen der Ebene mit dem Polarisator-Element und der Fokusebene.

Das doppelbrechende Polarisator-Element sollte allerdings im Strahlengang vor der weiteren Optik angeordnet sein, die beispielsweise als kollimierende Optik zur Erzeugung einer Winkel-zu-Orts-Transformation ausgebildet sein kann. Zusammen mit der von der Fokussieroptik erzeugten Winkel-zu-Orts-Transformation (bzw. äquivalent Orts-zu-Winkel-Transformation) wird der Ortsversatz der Teilstrahlen, der an dem Polarisator-Element erzeugt wird, in einen Ortsversatz in der Fokusebene überführt bzw. abgebildet. Die weitere, z.B. kollimierende Optik kann gemeinsam mit der Fokussieroptik eine Abbildung der Ebene mit dem doppelbrechenden Polarisator-Element auf die Fokusebene, d.h. auf eine mit der Fokuszone verknüpfte Ebene, mit einem vorgegebenen, z.B. verkleinernden Abbildungsmaßstab bewirken.

Bei einer weiteren Ausführungsform ist die Bearbeitungsoptik zur Erzeugung einer Mehrzahl von Paaren von zumindest teilweise überlappenden Fokuszonen entlang einer vorgegebenen Kontur, insbesondere entlang einer Vorzugsrichtung, in der Fokusebene ausgebildet, wobei sich Fokuszonen von jeweils zwei senkrecht zueinander polarisierten Teilstrahlen von unmittelbar benachbarten Paaren zumindest teilweise überlappen. Bei dieser Ausführungsform werden mindestens zwei Paare von Teilstrahlen erzeugt, deren Fokuszonen sich jeweils gegenseitig überlappen, so dass entlang der vorgegebenen, nicht zwingend geradlinigen Kontureine - im Fall einer Vorzugsrichtung linienförmige - Strahlform bzw. Intensitätsverteilung entsteht, die in der Regel einen kontinuierlichen Übergang, d.h. keine Nullstellen in der Intensitätsverteilung zwischen den Teilstrahlen bzw. zwischen den Fokuszonen, aufweist. Hierbei überlappen sich jeweils senkrecht zueinander polarisierte Teilstrahlen der jeweiligen Paare, allerdings nur so weit, dass diese sich nicht mit dem jeweils anders polarisierten Teilstrahl eines jeweiligen Paars überlappen, so dass auch in diesem Fall keine Überlagerung von identisch polarisierten Teilstrahlen auftritt.

Bei einer weiteren Ausführungsform umfasst die Bearbeitungsoptik eine bevorzugt diffraktive Strahlteiler-Optik zur Erzeugung einer Mehrzahl von Paaren von senkrecht zueinander polarisierten Teilstrahlen. Die Strahlteiler-Optik kann beispielsweise in Form eines diffraktiven optischen Elements ausgebildet sein, es kann sich aber auch um eine andere Art von Strahlteiler-Optik handeln, beispielsweise um eine geometrische Strahlteiler-Optik. Die Strahlteiler-Optik kann im Strahlengang des in die Bearbeitungsoptik eintretenden Laserstrahls vor dem Polarisator-Element angeordnet sein und mehrere Eingangslaserstrahlen erzeugen, die an dem Polarisator-Element jeweils in ein Paar von senkrecht zueinander polarisierten Teilstrahlen aufgeteilt werden. Auch der umgekehrte Fall ist möglich, d.h. die Strahlteiler-Optik kann im Strahlengang nach dem doppelbrechenden Polarisator-Element angeordnet sein. In diesem Fall wird aus dem Paar von Teilstrahlen, das von dem Polarisator-Element erzeugt wird, mittels der Strahlteiler-Optik eine Mehrzahl von Paaren von Teilstrahlen erzeugt, deren Fokuszonen sich insbesondere wie weiter oben beschrieben entlang einer Vorzugsrichtung teilweise überlappen können.

Bei einer weiteren Ausführungsform ist die Strahlteiler-Optik in einer zur Fokusebene optisch konjugierten Ebene angeordnet. In der zur Fokusebene konjugierten Ebene kann ein Winkelversatz zwischen den Paaren von Teilstrahlen erzeugt werden, der von Fokussieroptik in einen Ortsversatz in der Fokusebene transformiert wird. Die Strahlteiler-Optik kann in diesem Fall beispielsweise in einer zur Fokusebene optisch konjugierten Ebene zwischen der weiter oben beschriebenen weiteren abbildenden Optik und der Fokussieroptik angeordnet sein, um aus einem von dem Polarisator-Element erzeugten Paar von Teilstrahlen die Mehrzahl von Paaren von Teilstrahlen zu erzeugen.

Bei einer Weiterbildung ist die Strahlteiler-Optik gemeinsam mit dem doppelbrechenden Polarisator-Element in der zur Fokusebene optisch konjugierten Ebene angeordnet. In diesem Fall ist das Polarisator-Element in der Regel zur Erzeugung eines Winkelversatzes ausgebildet. Das Polarisator-Element und die Strahlteiler-Optik können in diesem Fall z.B. in Form von plattenförmigen optischen Elementen ausgebildet sein, die an ihren Stirnseiten miteinander verbunden sind oder aneinander anliegen. Im Sinne dieser Anmeldung wird unter einer gemeinsamen Anordnung in der zur Fokusebene optisch konjugierten Ebene verstanden, dass die optisch konjugierte Ebene durch eines dieser beiden optischen Elemente hindurch oder zwischen den beiden optischen Elementen verläuft. Hierbei kann das Polarisator-Element im Strahlengang nach der Strahlteiler-Optik angeordnet sein, es ist aber auch der umgekehrte Fall möglich.

Bei einer Weiterbildung dieser Ausführungsform ist die bevorzugt diffraktive Strahlteiler-Optik als strahlformende Optik zur Umwandlung eines eintretenden Laserstrahls mit Gauß-förmigem Strahlprofil in einen austretenden Laserstrahl mit einem Flat-Top-Strahlprofil ausgebildet. Die Formung eines Laserstrahls mit einem Flat-Top-Strahlprofil, d.h. mit einem Strahlprofil, das eine im Wesentlichen homogene Intensitäts-Verteilung mit steil abfallenden Flanken aufweist, ermöglicht die Kontrolle der Intensitätsverteilung auf einer Fläche, die im Wesentlichen senkrecht zur Propagationsrichtung orientiert ist. Das Flat-Top-Strahlprofil kann beispielsweise eine runde oder eine rechteckförmige Geometrie aufweisen, wobei bevorzugt eine Seite des Rechtecks entlang der durch die Polarisations-Aufteilung an dem Polarisator-Element erzeugten Vorzugsrichtung ausgerichtet ist. Überlappen sich Teilstrahlen mit einem solchen rechteckigen Flat-Top-Strahlprofil in den jeweiligen Randbereichen ihrer Fokuszonen, so kann eine linienförmige Strahlverteilung mit annähernd konstanter Intensität auf dem Werkstück erzeugt werden. Es versteht sich, dass das Flat-Top-Strahlprofil an Stelle einer runden oder rechteckförmigen Geometrie auch eine andere Geometrie aufweisen kann, beispielsweise eine Geometrie in Form einer Raute, eines Kreises mit kreisförmigen Ausschnitten, etc., bei der sich die Teilstrahlen bei einer Aneinanderreihung entlang einer vorgegebenen Kontur, insbesondere entlang einer Vorzugsrichtung, homogen ergänzen.

Bei einer Weiterbildung dieser Ausführungsform weist die Bearbeitungsoptik eine Filter-Optik auf, die im Strahlengang nach der Strahlteiler-Optik angeordnet ist. Insbesondere wenn die Stahlteiler-Optik zusätzlich als strahlformende Optik zur Erzeugung eines Flat-Top-Strahlprofils ausgebildet ist, kann es günstig sein, eine Filter-Optik zu verwenden, die z.B. als Phasenmaske bzw. als Phasenfilter oder in Form einer Iris-Blende bzw. Raumblende ausgebildet sein kann, um bei der Strahlformung erzeugte höhere Beugungsordnungen zu unterdrücken.

Es versteht sich, dass die Bearbeitungsoptik auch eine strahlformende Optik aufweisen kann, die zur Umwandlung eines eintretenden Laserstrahls mit Gauß-förmigem Strahlprofil in einen austretenden Laserstrahl mit einem Flat-Top-Strahlprofil ausgebildet ist, welche nicht als Strahlteiler-Optik ausgebildet ist. In diesem Fall kann die Bearbeitungsoptik ggf. zusätzlich eine Strahlteiler-Optik aufweisen, dies ist aber nicht zwingend der Fall.

Entsprechend der beanspruchten Erfindung umfasst die Bearbeitungsoptik eine strahlformende Optik zur Umwandlung eines eintretenden Laserstrahls mit Gauß-förmigem Strahlprofil in einen austretenden Laserstrahl mit einem quasi-nichtbeugenden Strahlprofil, insbesondere mit einem Bessel-artigen Strahlprofil. Die Verwendung eines quasi-nichtbeugenden Strahlprofils hat sich insbesondere für Glasschneide-Anwendungen oder für selektives Laserätzen als vorteilhaft herausgestellt, da bei einem solchen Strahlprofil in longitudinaler Richtung über eine vergleichsweise lange Distanz ein im Wesentlichen homogenes Strahlprofil aufrecht erhalten werden kann, wodurch ein Modifikationsvolumen mit einer Vorzugsrichtung erzeugt wird. Als besonders vorteilhaft hat sich hierbei ein Bessel-Strahl herausgestellt, ggf. können aber auch andere nicht-beugende Strahlprofile, z.B. ein Airy-Strahlprofil, ein Weber-Strahlprofil oder ein Mathieu-Strahlprofil mit der strahlformenden Optik erzeugt werden. Die strahlformende Optik kann ausgebildet sein, ein quasi-nichtbeugendes Strahlprofil mit einem zur Propagationsrichtung rotationssymmetrischen Strahlquerschnitt zu erzeugen.

Bei einer Weiterbildung ist die strahlformende Optik ausgebildet, ein quasi-nichtbeugendes Strahlprofil mit einem nicht rotationssymmetrischen Strahlquerschnitt, insbesondere mit einer Vorzugsrichtung, zu erzeugen. Es hat sich als günstig erwiesen, wenn die strahlformende Optik in diesem Fall als diffraktive Optik ausgebildet ist. Die Vorzugsrichtung des nicht-beugenden Strahlprofils stimmt in der Regel mit der (Vorzugs-)Richtung bzw. der Ebene überein, in welcher das Polarisator-Element die beiden Teilstrahlen erzeugt. Das quasi-nichtbeugende Strahlprofil kann entlang der Vorzugsrichtung eine Mehrzahl von zueinander beabstandeten (Neben-)Maxima aufweisen, so dass die strahlformende Optik in der Art einer Strahlteiler-Optik wirkt und beispielsweise ein so genanntes Multi-Bessel-Strahlprofil erzeugt. Die Lücken zwischen den Maxima des Strahlprofils werden in diesem Fall durch die Aufteilung in die jeweils zwei Teilstrahlen an dem Polarisator-Element gefüllt. Auch auf diese Weise kann in der Fokusebene eine Mehrzahl von Paaren von zumindest teilweise überlappenden Fokuszonen entlang einer vorgegebenen Kontur, in der Regel entlang der Vorzugsrichtung, erzeugt werden, wobei sich Fokuszonen von jeweils zwei senkrecht zueinander polarisierten Teilstrahlen von unmittelbar benachbarten Paaren zumindest teilweise überlappen. Bei einer weiteren Ausführungsform umfasst die strahlformende Optik ein Axicon und/oder ein diffraktives optisches Element. Die Erzeugung eines (quasi-)nicht-beugenden Strahlprofils, beispielsweise in Form eines Bessel-Strahls, kann vorteilhafter Weise mittels eines Axicons erzeugt werden, das typischerweise mindestens eine im Wesentlichen konische Fläche umfasst. Das Axicon bzw. die konische Fläche kann ggf. modifiziert werden, um eine Vorzugsrichtung des Strahlprofils zu erzeugen, um eine Homogenisierung des Strahlprofils zu erzeugen, etc. Alternativ oder zusätzlich kann ein diffraktives optisches Element zur Erzeugung des (quasi-)nicht-beugenden Strahlprofils verwendet werden. Mittels eines solchen diffraktiven optischen Elements können die Eigenschaften eines Axicons nachgebildet werden. Die strahlformende Optik kann ggf. alternativ oder zusätzlich ausgebildet sein, aus einem eintretenden Laserstrahl mit einem Gauß-förmigen Strahlprofil einen austretenden Laserstrahl mit einem Flat-Top-Strahlprofil erzeugen, etc.

Bei einer weiteren Ausführungsform umfasst die Bearbeitungsoptik einen Drehantrieb zum Drehen des doppelbrechenden Polarisator-Elements und bevorzugt der Strahlteiler-Optik und/oder der strahlformenden Optik um eine (gemeinsame) Drehachse. Die Drehung ist insbesondere sinnvoll, wenn teilweise überlappende Fokuszonen entlang einer vorgegebenen Kontur, insbesondere entlang einer Vorzugsrichtung, erzeugt werden sollen. Beim Drehen wirkt sich günstig aus, dass das doppelbrechende Polarisator-Element eine Justage-unkritische Komponente darstellt, was den Einsatz insbesondere in adaptiven Optiken begünstigt. Allerdings ist in der Regel der Ortsversatz oder der Winkelversatz, der von dem Polarisator-Element erzeugt wird, nicht symmetrisch zur Ausbreitungsrichtung des Eingangsstrahls bzw. zur Drehachse. Bei der Drehung des Polarisator-Elements um eine Drehachse, die in der Regel in longitudinaler Richtung verläuft, d.h. entlang der Ausbreitungsrichtung des Eingangsstrahls, welche eine Nachführung bzw. Drehung der weiter oben beschriebenen Vorzugsrichtung der Fokuszonen in Abhängigkeit von der jeweiligen Anwendung bzw. von der Relativbewegung zwischen der Bearbeitungsoptik und dem Werkstück ermöglicht, tritt daher ggf. ein unerwünschter, vom Drehwinkel abhängiger Winkel- und oder Orts-Offset der Teilstrahlen auf. Um diesen Offset zu kompensieren, kann ein geeignet ausgebildetes Polarisator-Element eingesetzt werden, beispielsweise ein Rochon-Prisma, welches vom ordentlichen Teilstrahl ohne Ablenkung durchlaufen wird, während der außerordentliche Teilstrahl sowohl einen Winkel- als auch einen Ortsversatz erfährt, der bei der Drehung des Rochon-Prismas den Offset kompensiert.

Bei einer Werkstückbearbeitung in Form eines Laserschneidprozesses zum Schneiden von Glas entlang einer Bearbeitungsbahn kann es erforderlich bzw. günstig sein, die Vorzugsrichtung der Fokuszonen in Abhängigkeit von einer ortsabhängig veränderlichen Vorschubrichtung bei der Bewegung relativ zum Werkstück zu verändern, um eine Rissausbreitung im Glas entlang Vorschubrichtung zu fördern. Die gezielte Ausrichtung von Rissen beim Glastrennen ermöglicht das Arbeiten in einem Prozessregime, welches eine deutlich vereinfachte Separation des Glases ermöglicht. Bei einer solchen Glasschneide-Anwendung werden in der Regel die Fokuszonen von zwei oder mehr Bessel-(Gauß-)Strahlen räumlich zumindest teilweise überlagert, wie weiter oben näher beschrieben ist. Für die Veränderung der Vorzugsrichtung ist es in diesem Fall nicht erforderlich, Justage-kritische optische Elemente wie z.B. Linsen ebenfalls zu drehen, auch wenn eine solche Drehung grundsätzlich ebenfalls möglich ist.

Bei einer weiteren Ausführungsform umfasst die Bearbeitungsoptik eine polarisationsbeeinflussende Einrichtung zur Erzeugung eines zirkular polarisierten Eingangslaserstrahls. Die Laserquelle erzeugt in der Regel einen linear polarisierten Eingangslaserstrahl, der an der polarisationsbeeinflussenden Einrichtung, beispielsweise in Form einer geeignet orientierten λ/4-Platte, in einen zirkular polarisierten Eingangslaserstrahl umgewandelt werden kann. Dies ist insbesondere günstig, wenn wie weiter oben beschrieben eine Drehung des Polarisator-Elements mittels des Drehantriebs erfolgt. Bei der Drehung des Polarisator-Elements (ohne Drehung der λ/4-Platte) verändert sich bei einem zirkular polarisierten Eingangslaserstrahl im Gegensatz zu einem linear polarisierten Eingangsstrahl das Teilungsverhältnis der Intensitäten der beiden senkrecht zueinander polarisierten Teilstrahlen bei der Drehung nicht, d.h. diese ist nicht vom Drehwinkel abhängig.

Für den Fall, dass das Teilungsverhältnis der Intensität bzw. der Leistung der beiden an dem Polarisator-Element erzeugten Teilstrahlen gezielt beeinflusst werden soll, kann die Polarisationsrichtung bzw. die Polarisationsebene des (in diesem Fall linear polarisiert auf das Polarisator-Element auftreffenden) Eingangsstrahls gezielt gedreht werden. Zu diesem Zweck kann eine Verzögerungs-Einrichtung, beispielsweise eine λ/2-Platte, oder eine λ/4-Platte, verwendet werden. Bei der Verwendung einer λ/2-Platte ist der auf diese auftreffende Eingangsstrahl typischerweise linear polarisiert. Durch eine Drehung der λ/2-Platte kann in diesem Fall die Polarisationsrichtung des linear polarisierten Eingangslaserstrahls gedreht werden, wodurch das Teilungsverhältnis der Leistung des Eingangslaserstrahls auf die beiden senkrecht zueinander polarisierten Teilstrahlen eingestellt werden kann. Bei der Verwendung einer λ/4-Platte ist der auf diese auftreffende Eingangslaserstrahl in der Regel zirkular polarisiert und wird von der λ/4-Platte in einen linear polarisierten Eingangslaserstrahl umgewandelt. Auch in diesem Fall kann durch eine Drehung der λ/4-Platte die Polarisationsrichtung des Eingangslaserstrahls gedreht und somit das Teilungsverhältnis eingestellt werden.

Die Erfindung betrifft auch eine Laserbearbeitungsvorrichtung, umfassend: eine Bearbeitungsoptik wie weiter oben beschrieben sowie eine Laserquelle, insbesondere eine Ultrakurzpuls-Laserquelle, zur Erzeugung eines Laserstrahls, insbesondere eines Laserstrahls mit einem Gauß-förmigen Strahlprofil. Die Laserquelle ist bevorzugt zur Erzeugung eines Single-Mode Laserstrahls mit einem Gauß-förmigen Strahlprofil ausgebildet, dies ist aber nicht zwingend erforderlich. Die Bearbeitungsoptik kann beispielsweise in einem Laserbearbeitungskopf bzw. in einem Gehäuse eines Laserbearbeitungskopfs untergebracht sein, der relativ zu dem Werkstück bewegbar ist. Die Laserbearbeitungsvorrichtung kann alternativ oder zusätzlich eine Scannereinrichtung umfassen, um die Teilstrahlen auf das Werkstück bzw. auf unterschiedliche Positionen auf dem Werkstück auszurichten. Neben den weiter oben beschriebenen Optiken kann die Bearbeitungsoptik auch weitere Optiken aufweisen, die beispielsweise eine räumliche Filterung oder eine räumliche Umordnung des Eingangslaserstrahls ermöglichen, um die Strahlformung zu begünstigen, z.B. die Homogenisierung eines Bessel-artigen Strahlprofils, Maskenabbildung, etc.

Die Erfindung betrifft auch ein Verfahren der eingangs genannten Art, bei dem die senkrecht zueinander polarisierten Teilstrahlen in der Fokusebene auf zumindest teilweise überlappende Fokuszonen fokussiert werden. Das Verfahren bietet die weiter oben in Zusammenhang mit der Bearbeitungsoptik beschriebenen Vorteile.

Beim Laserbearbeiten bzw. bei der Werkstückbearbeitung kann es sich um Laserabtragen, Laserschneiden, Oberflächenstrukturieren, Laserschweißen, Laserbohren, ... handeln. Abhängig von der jeweiligen Bearbeitungs-Anwendung kann es günstig sein, entweder ein doppelbrechendes Strahlteiler-Element zu verwenden, welches einen Winkelversatz, aber nur einen unwesentlichen Ortsversatz erzeugt (2 f - Setup, z.B. bei Strahlteiler-Anwendungen bzw. Laserabtragen) oder ein doppelbrechendes Strahlteiler-Element, welches einen Ortsversatz, aber nur einen unwesentlichen Winkelversatz erzeugt (4 f - Setup, beispielsweise bei der Verwendung von Bessel-ähnlichen Strahlprofilen beim Glastrennen bzw. Glasschneiden).

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a,b: schematische Darstellungen von zwei doppelbrechenden Polarisator-Elementen zur Erzeugung eines Winkelversatzes bzw. eines Ortsversatzes zwischen zwei senkrecht zueinander polarisierten Teilstrahlen,
- Fig. 2a,b: schematische Darstellungen einer Bearbeitungsoptik mit dem Polarisator-Element von Fig. 1a bzw. von Fig. 1b zur Erzeugung von zwei teilweise überlappenden Fokuszonen der beiden Teilstrahlen in einer Fokusebene,
- Fig. 3a,b: schematische Darstellungen analog zu Fig. 2a,b mit einer diffraktiven Strahlteiler-Optik zur Erzeugung einer Mehrzahl von Paaren von Teilstrahlen, deren Fokuszonen sich teilweise überlappen,
- Fig. 4a,b: schematische Darstellungen einer Bearbeitungsoptik ensprechend der beanspruchten Erfindung analog zu Fig. 2a,b mit einer strahlformenden Optik zur Erzeugung von zwei teilweise überlappenden Teilstrahlen mit Bessel-förmigem Strahlprofil,
- Fig. 5a,b: schematische Darstellungen einer Bearbeitungsoptik entsprechend der beanspruchten Erfindung analog zu Fig. 4a,b mit einer zusätzlichen Strahlteiler-Optik zur Erzeugung einer Mehrzahl von Paaren von teilweise überlappenden Teilstrahlen mit Bessel-förmigem Strahlprofil,
- Fig. 6: eine schematische Darstellung einer Bearbeitungsoptik analog zu Fig. 3a mit einer Flat-Top-Strahlprofil-formenden Optik zur Erzeugung von teilweise überappenden Fokuszonen, die ein im Wesentlichen homogenes Strahlprofil bilden,
- Fig. 7a,b: schematische Darstellungen eines mit der Bearbeitungsoptik von Fig. 4a,b erzeugten transversalen Bessel-Strahlprofils,
- Fig. 8: schematische Darstellungen eines mit der Bearbeitungsoptik von Fig. 5a,b erzeugten longitudinalen Bessel-Strahlprofils,
- Fig. 9a,b: schematische Darstellungen eines mit der Bearbeitungsoptik von Fig. 6a,b erzeugten Flat-Top-Strahlprofils,
- Fig. 10a,b: schematische Darstellungen einer Ausgestaltung der Bearbeitungsoptik von Fig. 3b, sowie
- Fig. 11a-c: schematische Darstellungen der Bearbeitungsoptik von Fig. 4b mit einer strahlformenden Optik in Form eines Axicons.

In der folgenden Beschreibung der Zeichnungen werden für gleiche bzw. funktionsgleiche Bauteile identische Bezugszeichen verwendet.

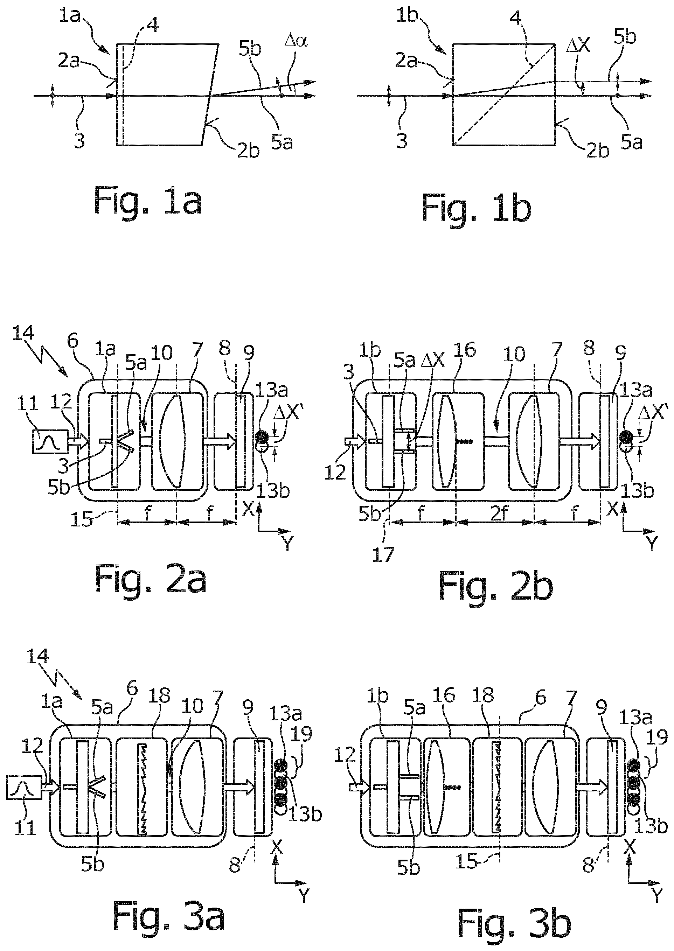

**Fig. 1a,b** zeigen schematisch jeweils ein doppelbrechendes Polarisator-Element **1a, 1b** in Form eines doppelbrechenden Kristalls. Als Kristall-Material für das Polarisator-Element 1a, 1b können unterschiedliche doppelbrechende Materialien verwendet werden, z.B. alpha-BBO (alpha-Bariumborat), YVO4 (Yttrium-Vandanat), kristalliner Quarz, etc. Das doppelbrechenden Polarisator-Element 1a von Fig. 1a ist keilförmig ausgebildet, d.h. eine plane Strahleintrittsfläche **2a** zum Eintritt eines Eingangslaserstrahls **3** und eine plane Strahlaustrittsfläche **2b** des Polarisator-Elements 1a sind unter einem (Keil-)Winkel zueinander ausgerichtet. Die bzw. eine optische Achse **4** des Kristall-Materials ist parallel zur Strahleintrittsfläche 2a ausgerichtet.

Der in das doppelbrechende Polarisator-Element 1a senkrecht zur Strahleintrittsfläche 2a eintretende unpolarisierte oder zirkular polarisierte Eingangslaserstrahl 3 wird an der unter einem Winkel zur Strahleintrittsfläche 2a geneigten Strahlaustrittsfläche 2b in zwei Teilstrahlen **5a, 5b** aufgeteilt, die senkrecht zueinander (s- bzw. p-polarisiert) sind. In Fig. 1a ist wie allgemein üblich der s-polarisierte Teilstrahl 5a durch einen Punkt gekennzeichnet, während der zweite, p-polarisierte Teilstrahl 5b durch einen Doppelpfeil gekennzeichnet ist. Der erste, p-polarisierte Teilstrahl 5a wird beim Austritt aus dem doppelbrechenden Polarisator-Element 1a weniger stark gebrochen als der zweite, s-polarisierte Teilstrahl 5a, so dass ein Winkelversatz **Δα** zwischen dem ersten und dem zweiten Teilstrahl 5a, 5b auftritt. Der erste und zweite Teilstrahl 5a, 5b treten hierbei an derselben Stelle an der Strahlaustrittsfläche 2b aus dem doppelbrechenden Polarisator-Element 1a aus, d.h. es wird zwar der Winkelversatz Δα, aber kein Ortsversatz zwischen den beiden Teilstrahlen 5a, 5b erzeugt.

Bei dem in Fig. 1b gezeigten Polarisator-Element 1b sind die Strahleintrittsfläche 2a und die Strahlaustrittsfläche 2b parallel zueinander ausgerichtet und die optische Achse 4 des Kristall-Materials ist unter einem Winkel von 45° zur Strahleintrittsfläche 2a ausgerichtet. Der senkrecht zur Strahleintrittsfläche 2a auftreffende Eingangsstrahl 3 wird in diesem Fall an der Strahleintrittsfläche 2a in einen ersten, ordentlichen Teilstrahl 5a und einen zweiten, außerordentlichen Teilstrahl 5b aufgeteilt. Die beiden Teilstrahlen 5a, 5b treten an der Strahlaustrittsfläche 2b parallel, d.h. ohne einen Winkelversatz, aber mit einem Ortsversatz **Δx** aus.

Die beiden in Fig. 1a und in Fig. 1b dargestellten doppelbrechenden Polarisator-Elemente 1a, 1b unterscheiden sich somit grundlegend dadurch, dass das in Fig. 1a gezeigte Polarisator-Element 1a einen Winkelversatz Δa (ohne Ortsversatz) und dass das in Fig. 1b gezeigte Polarisator-Element 1b einen Ortsversatz Δx (ohne Winkelversatz) erzeugt. Beide Polarisator-Elemente 1a, 1b können eine Komponente einer Bearbeitungsoptik **6** bilden, die beispielsweise wie in **Fig. 2a,b** dargestellt ausgebildet sein kann. Es versteht sich, dass die Bearbeitungsoptik 6 auch Polarisator-Elemente aufweisen kann, die sowohl einen Ortsversatz Δx als auch einen Winkelversatz Δα erzeugen, wie dies bei herkömmlichen Prismen-Polarisatoren der Fall ist, die in der Regel zwei doppelbrechende optische Elemente aufweisen. Insbesondere kann die Bearbeitungsoptik 6 ein Polarisator-Element aufweisen, das einen bei der Drehung des Polarisator-Elements (s.u.) auftretenden Winkel-Offset und/oder Orts-Offset kompensiert. Beispielsweise kann als Polarisator-Element in diesem Fall ein Rochon-Prisma verwendet werden.

Die in Fig. 2a,b dargestellte Bearbeitungsoptik 6 weist eine Fokussieroptik **7** auf, die zur Fokussierung der beiden Teilstrahlen 5a, 5b auf eine Fokusebene **8** dient, die in Fig. 2a,b an der Oberseite eines zu bearbeitenden Werkstücks **9** liegt. Anders als in Fig. 2a,b dargestellt ist, kann die Fokusebene 8 auch im Strahlengang **10** der Bearbeitungsoptik 6 kurz vor dem Werkstück 9, in einer Ebene innerhalb des Werkstücks 9 oder kurz nach dem Werkstück 9 liegen. Der Eingangslaserstrahl 3, der auf das doppelbrechende Polarisator-Element 1a, 1b trifft, entspricht einem von einer Laserquelle **11** erzeugten, in die Bearbeitungsoptik 6 eintretenden Laserstrahl **12.** Die in Fig. 2a,b gezeigte Bearbeitungsoptik 6 ist ausgebildet, die beiden Teilstrahlen 5a, 5b auf zwei Fokuszonen **13a, 13b** in der Fokusebene 8 zu fokussieren, die sich teilweise überlappen und die in Fig. 2a,b durch einen schwarzen und einen weißen Kreis dargestellt sind. Die in Fig. 2a dargestellte Bearbeitungsoptik 6 bildet zusammen mit der Laserquelle 11 eine Laserbearbeitungsvorrichtung **14** zur Bearbeitung des Werkstücks 9, beispielsweise in Form einer abtragenden Laserbearbeitung. Die Bearbeitungsoptik 6 kann zu diesem Zweck relativ zum Werkstück 9 bewegt werden und/oder eine Scannereinrichtung zur Ausrichtung der Teilstrahlen 5a, 5b an unterschiedliche Orte in der Fokusebene 8 aufweisen.

Bei der in Fig. 2a dargestellten Bearbeitungsoptik 6 ist das doppelbrechende Polarisator-Element 1a in einer zur Fokusebene 8 optisch konjugierten Ebene **15** angeordnet. Die optisch konjugierte Ebene 15 ist mit der Fokusebene 8 durch eine Winkel-zu-Orts-Transformation (Fourier-Transformation) verknüpft, die von der Fokussieroptik 7 erzeugt wird. Winkel in der optisch konjugierten Ebene 15 entsprechen Orten in der Fokusebene 8 und umgekehrt. Die beiden mit dem Winkelversatz Δα aus dem Polarisator-Element 1a austretenden Teilstrahlen 5a, 5b werden daher mit einem Ortsversatz **ΔX'** der beiden Zentren der Fokuszonen 13a,b in der Fokusebene 8 fokussiert, der kleiner ist als der Durchmesser der Fokuszonen 13a,b, so dass die beiden Fokuszonen 13a,b einander überlappen. Aufgrund des nicht vorhandenen Ortsversatzes der beiden aus dem Polarisator-Element 1a austretenden Teilstrahlen 5a, 5b sind die beiden Teilstrahlen 5a, 5b nach dem Durchlaufen der Fokussieroptik 7 parallel und senkrecht zur Fokusebene 8 ausgerichtet. Der Abstand zwischen der Fokusebene 8 und der optisch konjugierten Ebene 15 liegt bei dem in Fig. 2a gezeigten Beispiel bei 2 f, wobei f die Brennweite der Fokussieroptik 7 bezeichnet.

Die in Fig. 2b dargestellte Bearbeitungsoptik 6 weist eine weitere abbildende Optik **16** auf, die im Strahlengang 10 vor der Fokussieroptik 7 angeordnet ist. Die abbildende Optik 16 bildet gemeinsam mit der Fokussieroptik 7 die beiden an dem im Strahlengang 10 vor der weiteren abbildenden bzw. kollimierenden Optik 16 angeordneten Polarisator-Element 1b mit einem Ortsversatz Δx erzeugten Teilstrahlen 5a, 5b in die Fokusebene 8 ab. Der Abbildungsmaßstab bei der Abbildung in die Fokusebene 8 ist hierbei derart gewählt, dass der Durchmesser der beiden Teilstrahlen 5a,b sowie der Abstand Δx' zwischen den beiden Teilstrahlen 5a,b in der Fokusebene 8 reduziert wird . Das Polarisator-Element 1b ist bei dem in Fig. 2b dargestellten Beispiel vereinfachend in einem Abstand von 4 f von der Fokusebene 8 in einer der Fokusebene 8 entsprechenden, weiteren Ebene **17** angeordnet. In der Regel weisen die weitere Optik 16 und die Fokussieroptik 7 unterschiedliche Brennweiten f₁, f₂ auf, d.h. die weitere Ebene 17 ist im Abstand 2 (f₁ + f₂) angeordnet. Durch die Wahl geeigneter unterschiedlicher Brennweiten f₁, f₂ kann der Abbildungsmaßstab eingestellt werden, beispielsweise um die weiter oben beschriebene Verkleinerung zu bewirken.

Die Ortsverteilung in der weiteren Ebene 17 entspricht der Ortsverteilung in der Fokusebene 8 (mit einer Anpassung des Maßstabs). Da das Polarisator-Element 1b im kollimierten Strahlengang 10 des in die Bearbeitungsoptik 6 eintretenden Laserstrahls 12 angeordnet ist, ist es nicht zwingend erforderlich, dass dieses in der weiteren Ebene 17 positioniert ist, vielmehr kann dieses auch im Strahlengang 10 vor oder nach der weiteren Ebene 17 angeordnet sein.

**Fig. 3a,b** zeigen jeweils die Bearbeitungsoptik 6 von Fig. 2a,b mit einer zusätzlichen diffraktiven Strahlteiler-Optik **18,** die zur Erzeugung einer Mehrzahl von Paaren **19** von Fokuszonen 13a, 13b ausgebildet ist, die entlang einer Vorzugs-Richtung X in der Fokusebene 8 verlaufen, wie dies in Fig. 3a,b dargestellt ist. Die Fokuszonen 13a,b eines Paares 19 werden von jeweils senkrecht zueinander polarisierten Teilstrahlen 5a, 5b gebildet, die sich teilweise überlappen, wie dies auch in Fig. 2a,b dargestellt ist. Zusätzlich überlappen sich auch die Fokuszonen 13a, 13b von jeweils zwei senkrecht zueinander polarisierten Teilstrahlen 5a, 5b von jeweils zwei unmittelbar benachbarten Paaren 19. Bei allen in Fig. 3a,b dargestellten Fokuszonen 13a, 13b überlappen sich nur senkrecht zueinander polarisierte Teilstrahlen 5a, 5b, so dass keine Interferenzeffekte zwischen den Teilstrahlen 5a, 5b auftreten. Die auf diese Weise in der Fokusebene 8 erzeugte, im Wesentlichen linienförmige Intensitätsverteilung, die sich entlang der Vorzugsrichtung X erstreckt, erhöht die Effizienz beim Laser-Abtragen der Oberfläche eines z.B. metallischen Werkstücks 9.

Bei der in Fig. 3a gezeigten Bearbeitungsoptik 6 ist die Strahlteiler-Optik 18 im Strahlengang 10 nach dem Polarisator-Element 1a angeordnet. Die diffraktive Strahlteiler-Optik 18 ist in Fig. 3a lediglich beispielhaft im Strahlengang 10 hinter dem Polarisator-Element 1a dargestellt und kann alternativ auch vor dem Polarisator-Element 1a angeordnet sein. Bei der in Fig. 3b gezeigten Bearbeitungsoptik 6 ist die Strahlteiler-Optik 18 im Strahlengang 10 zwischen der weiteren abbildenden Optik 16 und der Fokussieroptik 7 angeordnet, und zwar in einer zur Fokusebene 8 optisch konjugierten Ebene 15. Insbesondere können beide optischen Elemente 1a, 18 auch in einer gemeinsamen Ebene angeordnet sein, wie weiter unten näher beschrieben wird.

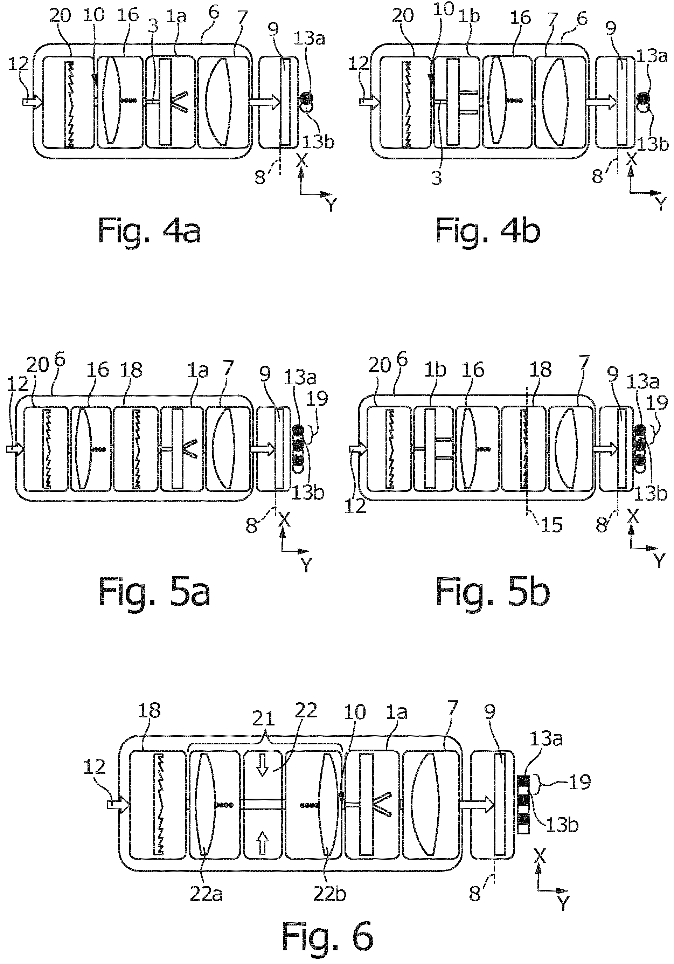

Bei der in **Fig. 4a,b** gezeigten Bearbeitungsoptik 6 wird wie in Fig. 2a,b der Eingangslaserstrahl 3 in zwei Teilstrahlen 5a,b aufgeteilt, deren Fokuszonen 13a,b sich in der Fokusebene 8 überlappen. Die Bearbeitungsoptik 6 von Fig. 4a,b weist entsprechend der beanspruchten Erfindung eine strahlformende Optik **20** zur Umwandlung eines in die Bearbeitungsoptik 6 eintretenden Laserstrahls, der im gezeigten Beispiel mit dem von der Laserquelle 11 erzeugten Laserstrahl 12 mit Gauß-förmigen Strahlprofil übereinstimmt, in einen Eingangslaserstrahl 3 mit einem quasi-nichtbeugenden Strahlprofil, genauer gesagt mit einem Bessel-artigen Strahlprofil auf.

Das Bessel-artige Strahlprofil kann rotationssymmetrisch zur Ausbreitungsrichtung sein, es ist aber auch möglich, dass die strahlformende Optik 20 ein nicht rotationssymmetrisches Strahlprofil erzeugt, welches eine Vorzugsrichtung aufweist, d.h. die strahlformende Optik 20 wirkt in der Art einer Strahlteiler-Optik. Auch andere bzw. komplexere Strahlprofile, z.B. nicht-beugende Strahlprofile wie Airy-Strahlprofile, Mathieu-Strahlprofile, eine Strahl-Homogenisierung, die Erzeugung eines Vortex, einer Bottle, ... können mit Hilfe der strahlformenden Optik 20 erzeugt werden. Die strahlformende Optik 20 kann als diffraktives optisches Element, als Axicon, ... oder einer Kombination aus diesen Elementen ausgebildet sein. Die strahlformende Optik 20 kann auch als diffraktives optisches Element ausgebildet sein, welches die Funktion eines Axicons aufweist.

Nach der strahlformenden Optik 20 liegt im vorliegenden Beispiel ein Strahlprofil vor, welches einem im Wesentlichen rotationssymmetrischen Bessel-Strahl entspricht, d.h. einem radialen Intensitätsverlauf in transversaler Richtung in Form einer Bessel-Funktion. Die in Fig. 4a gezeigte Bearbeitungsoptik 6 weist zusätzlich eine abbildende bzw. kollimierende Optik 16 auf, die im Strahlengang 10 zwischen der strahlformenden Optik 20 und dem Polarisator-Element 1a angeordnet ist und die zur verkleinerten Abbildung dient. Am Ort des Polarisator-Elements 1a liegt in Fig. 4a das Fernfeld des Bessel-artigen Strahlprofils vor. Die Erzeugung eines Strahlprofils in Form eines Bessel-ähnlichen Strahls hat sich für das Trennen eines Werkstücks 9 als vorteilhaft erwiesen, welches aus einem transparenten Werkstoff, beispielsweise aus Glas, hergestellt ist und bei dem eine Trennung und ggf. Rissführung entlang einer vorgegebenen Richtung günstig ist, die der in Fig. 4a,b gezeigten Vorzugsrichtung X entsprechen kann, die aber auch unter einem vorgegebenen Winkel zu der Vorzugsrichtung X ausgerichtet sein kann oder ggf. einer von einer Linie abweichende, vorgegebene Kontur bildet. Auch die Tatsache, dass das longitudinale Strahlprofil der Teilstrahlen 5a, 5b, die in das Werkstück 9 eindringen, über eine vergleichsweise große Länge nahezu homogen verläuft, erleichtert die Trennung, ggf. unter Rissbildung, und damit die trennende Bearbeitung des Glas-Materials.

Die in **Fig. 5a,b** dargestellte Bearbeitungsoptik 6 entspricht der in Fig. 4a,b dargestellten Bearbeitungsoptik 6, weist aber zusätzlich eine Strahlteiler-Optik 18 auf, die wie in Zusammenhang mit Fig. 3a,b beschrieben zur Erzeugung einer Mehrzahl von Paaren 19 von Fokuszonen 13a, 13b in der Fokusebene 8 ausgebildet ist, die nebeneinander entlang der Vorzugsrichtung X angeordnet sind.

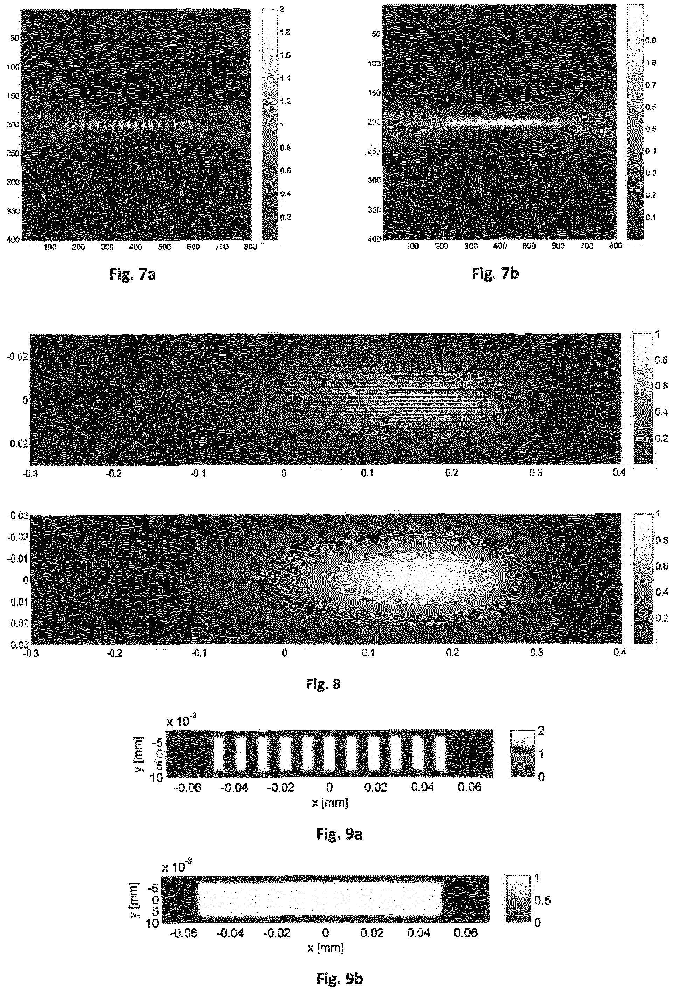

Das mit der in Fig. 4a,b dargestellten Bearbeitungsoptik 6 erzeugte transversale Strahlprofil in der Fokusebene 8 (in X-Richtung) für eine Polarisationsrichtung, z.B. für s-polarisierte Teilstrahlen 5a, ist in **Fig. 7a** dargestellt. Im gezeigten Beispiel wird mit der strahlformenden Optik 20 ein in Fig. 7a dargestelltes, nicht rotationssymmetrisches Strahlprofil erzeugt, welches entlang einer Vorzugsrichtung (X-Richtung) mehrere Maxima aufweist (Multi-Bessel), d.h. die strahlformende Optik 20 wirkt quasi in der Art einer Strahlteiler-Optik. **Fig. 7b** zeigt das transversale Stahlprofil in der Fokusebene 8 bei der teilweisen Überlagerung der Fokuszonen 13a, 13b von zueinander senkrecht polarisierten Teilstrahlen 5a, 5b, wie diese mit Hilfe des Polarisator-Elements 1b von Fig. 4b erzeugt wird. **Fig. 8** zeigt analog das longitudinale Strahlprofil, das von der in Fig. 5b gezeigten Bearbeitungsoptik 6 erzeugt wird, ohne (in Fig. 8 oben) und mit (in Fig. 8 unten) Überlagerung der senkrecht zueinander polarisierten Teilstrahlen 5a, 5b mittels des Polarisator-Elements 1b.

**Fig. 6** zeigt eine Bearbeitungsoptik 6, die der in Fig. 3a gezeigten Bearbeitungsoptik 6 entspricht und bei der die Stahlteiler-Optik 18 zusätzlich als strahlformende Optik zur Umwandlung eines eintretenden Laserstrahls 12 in einen austretenden Laserstrahl mit einem Flat-Top-Strahlprofil ausgebildet ist. Die Strahlteiler-Optik 18 ist anders als in Fig. 3a im Strahlengang 10 vor dem Polarisator-Element 1a angeordnet. Zwischen der Strahlteiler-Optik 18 und dem Polarisator-Element 1a ist eine Filter-Optik **21** angeordnet, die ein optisches Filter-Element **22** aufweist, das parasitäre Strahlungsanteile von der Nutzstrahlung separiert. Das Filter-Element 22 kann beispielsweise in Form einer Blende oder in Form einer Phasenmaske **22** ausgebildet sein. Das Filter-Element 22 ist zwischen zwei weiteren abbildenden (kollimierenden bzw. fokussierenden) Optiken **22a, 22b** angeordnet ist. Die Filter-Optik 21 dient zur Filterung von unerwünschten Beugungsanteilen, die bei der Strahlformung mittels der Strahlteiler-Optik 18 erzeugt werden und verhindert, dass diese parasitären Strahlungsanteile zum Werkstück 9 oder zu anderen Stellen gelangen, an denen sich diese störend auswirken. Bei dem in Fig. 6 gezeigten Beispiel könnte an Stelle des Polarisator-Elements 1a, welches zur Erzeugung eines Winkelversatzes Δα (ohne Ortsversatz) ausgebildet ist, ein Polarisator-Element 1b angrenzend zu dem Filter-Element 22 angeordnet werden, welches zur Erzeugung eines Ortsversatzes Δx (ohne Winkelversatz) ausgebildet ist.

Das in der Fokusebene 8 erzeugte Intensitätsprofil ist für die den ersten Teilstrahlen 5a zugeordneten Fokuszonen 13a in **Fig. 9a** dargestellt. Wie in Fig. 9a zu erkennen ist, werden in der Fokusebene 8 jeweils rechteckige Fokuszonen 13a erzeugt, die eine im Wesentlichen konstante Strahlungs-Intensität aufweisen. **Fig. 9b** zeigt das Intensitätsprofil in der Fokusebene 8 für die in Fig. 6 dargestellten überlappenden Fokuszonen 13a,b der beiden senkrecht zueinander polarisierten Teilstrahlen 5a, 5b. Wie in Fig. 9b zu erkennen ist, wird mit Hilfe des Polarisator-Elements 1a ein im Wesentlichen homogenes linienförmiges Intensitäts- bzw. Strahlprofil in der Fokusebene 8 entlang der Vorzugsrichtung X erzeugt. Das in Fig. 9a,b gezeigte Intensitätsprofil kann grundsätzlich auch (kompakter) mittels der in Fig. 3a,b gezeigten Bearbeitungsoptik 6 erzeugt werden. Auch bei der in Fig. 3a,b gezeigten Bearbeitungsoptik 6 kann eine Filter-Optik 21 bzw. ein Filter-Element 22 verwendet werden, welches im Strahlengang 10 nach der Strahlteiler-Optik 18 angeordnet ist.

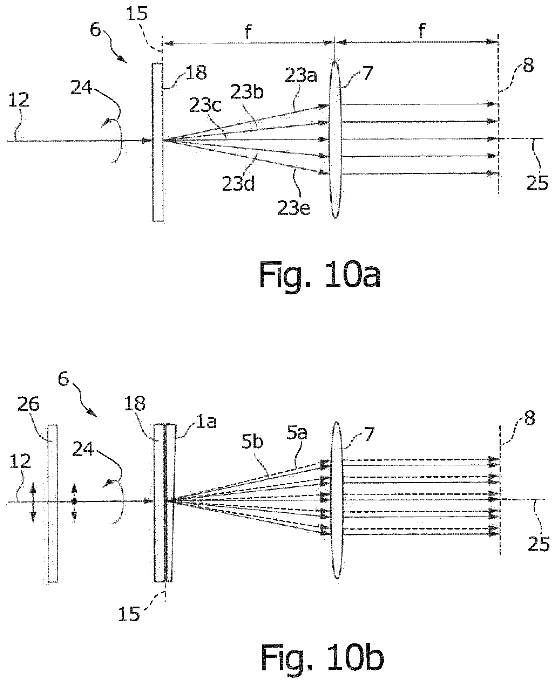

Der Strahlengang 10 der in Fig. 3a schematisch dargestellten Bearbeitungsoptik 6 ist in **Fig. 10a,b** in realistischerer Weise dargestellt. Fig. 10a zeigt hierbei den Strahlengang 10 ohne das Polarisator-Element 1a, d.h. nur die diffraktive, plattenförmige Strahlteiler-Optik 18, die aus dem in die Bearbeitungsoptik 6 eintretenden Laserstrahl 12 eine Mehrzahl von beispielhaft fünf austretenden Laserstrahlen **23a-e** erzeugt, die mittels der Fokussieroptik 17 auf die Fokusebene 8 fokussiert werden. Fig. 10b zeigt die Bearbeitungsoptik 6 von Fig. 10a, die zusätzlich das Polarisator-Element 1a aufweist, das im Strahlengang 10 hinter dem diffraktiven optischen Element 18 angeordnet ist und das jeden der ausgehenden Laserstrahlen 23a-e in zwei senkrecht zueinander polarisierte Teilstrahlen 5a, 5b aufteilt. Die Fokussieroptik 7 in Form einer Fokussierlinse richtet die Teilstrahlen 5a, 5b parallel zueinander aus, so dass diese senkrecht auf die Fokusebene 8 treffen. Die nicht bildlich dargestellten Fokuszonen 13a, 13b der jeweiligen senkrecht aufeinander stehenden Teilstrahlen 5a, 5b überlappen sich hierbei gegenseitig. Wie in Fig. 10a,b ebenfalls zu erkennen ist, weist die Bearbeitungsoptik 6 einen durch einen Pfeil angedeuteten Drehantrieb **24** auf, um das plattenförmige diffraktive optische Element 18 gemeinsam mit dem an diesem befestigten Polarisator-Element 1a um eine zentrisch und parallel zur Ausbreitungsrichtung des Eingangsstrahls 12 verlaufende Drehachse **25** zu drehen. Durch die Drehung kann die Ausrichtung der Teilstrahlen 5a, 5b in der Fokusebene 8 bzw. die Vorzugsrichtung X gedreht werden.

Um einen unerwünschten, vom Drehwinkel um die Drehachse 25 abhängigen Offset der Teilstrahlen 23a-e in der Fokusebene 8 zu vermeiden, weist die in Fig. 10b dargestellte Bearbeitungsoptik 6 eine polarisationsbeeinflussende Einrichtung in Form einer λ/4-Platte **26** auf. Die λ/4-Platte 26 ist geeignet orientiert, um die lineare Polarisation des Eingangslaserstrahls 12 in eine zirkulare Polarisation umzuwandeln. Aufgrund der zirkularen Polarisation des Eingangslaserstrahls 12 kann neben dem unerwünschten Offset auch eine - in der Regel unerwünschte - vom Drehwinkel um die Drehachse 25 abhängige Variation der Aufteilung der Leistung des Eingangslaserstrahls 12 auf die beiden senkrecht zueinander polarisierten Teilstrahlen 5a,b vermieden werden.

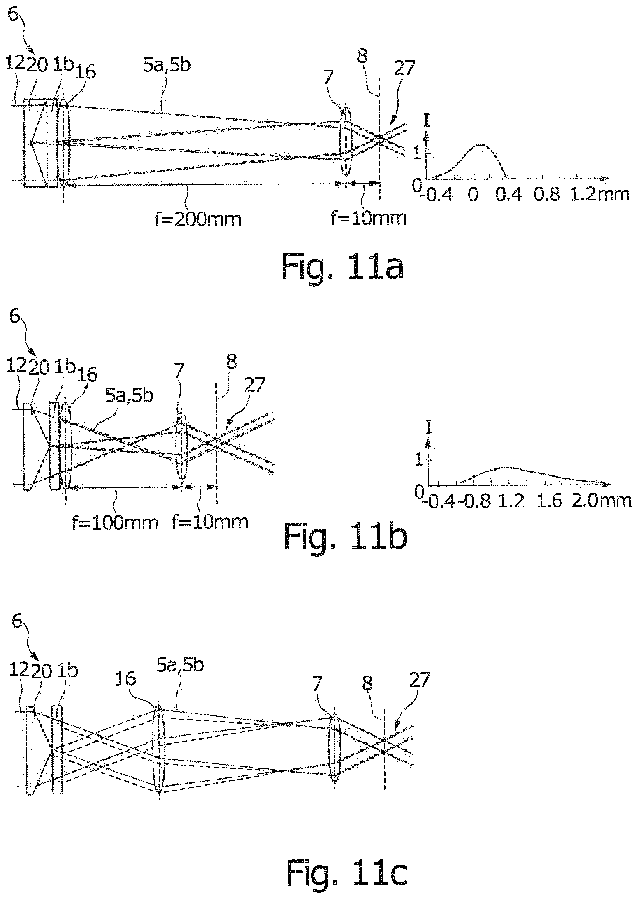

**Fig. 11a****-c** zeigen jeweils eine Bearbeitungsoptik 6, die der in Fig. 4b dargestellten Bearbeitungsoptik 6 entspricht. Die Bearbeitungsoptik 6 weist ein refraktives optisches Element in Form eines Axicons 20 auf, um aus dem Eingangsstrahl 12 mit dem Gauß-förmigen Strahlprofil ein Bessel-artiges Strahlprofil zu erzeugen. An Stelle des Axicons 20 kann auch ein diffraktives optisches Element als strahlformende Optik verwendet werden. Insbesondere bei Verwendung eines diffraktiven optischen Elements kann auch ein Bessel-artiges Strahlprofil mit einer Vorzugsrichtung (X-Richtung) erzeugt werden (vgl. Fig. 7a), d.h. die strahlformende Optik 20 wirkt in der Art einer Strahlteiler-Optik. Das im Strahlweg nachfolgende Polarisator-Element 1b teilt den Eingangsstrahl 12 auf die beiden senkrecht zueinander polarisierten Teilstrahlen 5a, 5b auf, die von der abbildenden Optik 16 (mit Brennweite f = 200 mm in Fig. 11a bzw. mit Brennweite f = 100 mm in Fig. 11b) und der Fokussieroptik 7 (mit Brennweite f = 10 mm) auf die Fokusebene 8 fokussiert werden. In der Fokusebene 8 entsteht so ein in longitudinaler Richtung vergleichsweise langgezogenes Fokusprofil **27,** dessen Intensitätsverteilung in Fig. 11a,b jeweils auf der rechten Seite dargestellt ist.

Die in Fig. 11a dargestellte Bearbeitungsoptik 6 unterscheidet sich von den in Fig. 11b,c dargestellten Bearbeitungsoptiken 6 dadurch, dass es sich bei dem in Fig. 11a gezeigten Axicon 20 um ein inverses Axicon handelt, bei dem die konische Fläche konkav gekrümmt ist, während es sich bei den in Fig. 11b,c gezeigten Axicon 20 um ein herkömmliches Axicon 20 handelt, bei dem die konische Fläche konvex gekrümmt ist. Es versteht sich, dass auch das in Fig. 11b,c gezeigte Axicon 20 durch ein geeignet ausgebildetes diffraktives optisches Element ersetzt oder ggf. mit diesem kombiniert werden kann. Die in Fig. 11c dargestellte Bearbeitungsoptik 6 unterscheidet sich von der in Fig. 11b dargestellten Bearbeitungsoptik 6 dadurch, dass die weitere abbildende Optik 16 von dem Polarisator-Element 1b beabstandet angeordnet ist. Mit der in Fig. 11a-c dargestellten Bearbeitungsoptik 6 lässt sich eine Glasschneide-Anwendung besonders vorteilhaft durchführen. Abhängig von der Anwendung kann es sinnvoll sein, in der Fokusebene 8 an Stelle von linear polarisierten Teilstrahlen 5a, 5b links bzw. rechts zirkular polarisierte Teilstrahlen 5a, 5b zu erzeugen. Zu diesem Zweck kann ein Verzögerungs-Element, z.B. in Form einer λ/4-Platte, an geeigneter Stelle im Strahlengang 10 nach dem Polarisator-Element 1a, 1b angeordnet werden.

## Patentansprüche

1. Bearbeitungsoptik (6) zur Werkstückbearbeitung, umfassend:
ein doppelbrechendes Polarisator-Element (1a, 1b) zur Aufteilung mindestens eines Eingangslaserstrahls (12) in ein Paar von senkrecht zueinander polarisierten Teilstrahlen (5a, 5b), sowie
eine im Strahlengang (10) nach dem Polarisator-Element (1a, 1b) angeordnete Fokussieroptik (7) zur Fokussierung der Teilstrahlen (5a, 5b) auf Fokuszonen (13a, 13b), bevorzugt in einer Fokusebene (8),
**dadurch gekennzeichnet,**
**dass** die Bearbeitungsoptik (6) zur Erzeugung von zumindest teilweise überlappenden Fokuszonen (13a, 13b) der senkrecht zueinander polarisierten Teilstrahlen (5a, 5b) ausgebildet ist und dass die Bearbeitungsoptik (6) eine strahlformende Optik (20) zur Umwandlung eines eintretenden Laserstrahls (12) mit Gauß-förmigem Strahlprofil in einen austretenden Laserstrahl (3) mit einem quasi-nichtbeugenden Strahlprofil umfasst, wobei die strahlformende Optik (20) im Strahlengang (10) vor dem doppelbrechenden Polarisator-Element (1a, 1b) angeordnet ist.

2. Bearbeitungsoptik nach Anspruch 1, bei der das doppelbrechende Polarisator-Element (1a, 1b) entweder zur Erzeugung eines Ortsversatzes (Δx) oder zur Erzeugung eines Winkelversatzes (Δα) oder zur Erzeugung einer Kombination aus Ortsversatz (Δx) und Winkelversatz (Δα) zwischen den zwei senkrecht zueinander polarisierten Teilstrahlen (5a, 5b) ausgebildet ist.

3. Bearbeitungsoptik nach Anspruch 2, bei der das doppelbrechende Polarisator-Element (1a) zur Erzeugung eines Winkelversatzes (Δa) ausgebildet und in einer zur Fokusebene (8) optisch konjugierten Ebene (15) angeordnet ist.

4. Bearbeitungsoptik nach Anspruch 2, bei der das Polarisator-Element (1b) zur Erzeugung eines Ortsversatzes (Δx) ausgebildet und im Strahlengang (10) vor einer weiteren, bevorzugt kollimierenden Optik (16) angeordnet ist, wobei die Bearbeitungsoptik (6) ausgebildet ist, den Ortsversatz (Δx) zwischen den senkrecht zueinander polarisierten Teilstrahlen (5a, 5b) in die Fokusebene (8) abzubilden.

5. Bearbeitungsoptik nach einem der vorhergehenden Ansprüche, die zur Erzeugung einer Mehrzahl von Paaren (19) von zumindest teilweise überlappenden Fokuszonen (13a, 13b) entlang einer vorgegebenen Kontur, insbesondere entlang einer Vorzugsrichtung (X), in der Fokusebene (8) ausgebildet ist, wobei sich Fokuszonen (13a, 13b) von jeweils zwei senkrecht zueinander polarisierten Teilstrahlen (5a, 5b) von unmittelbar benachbarten Paaren (19) zumindest teilweise überlappen.

6. Bearbeitungsoptik nach Anspruch 5, weiter umfassend: eine bevorzugt diffraktive Strahlteiler-Optik (18) zur Erzeugung der Mehrzahl von Paaren (19) von senkrecht zueinander polarisierten Teilstrahlen (5a, 5b).

7. Bearbeitungsoptik nach Anspruch 6, bei welcher die Strahlteiler-Optik (18) in einer zur Fokusebene (8) optisch konjugierten Ebene (15) angeordnet ist.

8. Bearbeitungsoptik nach Anspruch 7, bei welcher die Strahlteiler-Optik (18) gemeinsam mit dem doppelbrechenden Polarisator-Element (1a) in der zur Fokusebene (8) optisch konjugierten Ebene (15) angeordnet ist.

9. Bearbeitungsoptik nach einem der Ansprüche 6 bis 8, bei welcher die Strahlteiler-Optik (18) als strahlformende Optik zur Umwandlung eines eintretenden Laserstrahls (12) mit Gauß-förmigem Strahlprofil in einen austretenden Laserstrahl (3) mit einem Flat-Top-Strahlprofil ausgebildet ist.

10. Bearbeitungsoptik nach einem der Ansprüche 6 bis 9, weiter umfassend: eine der diffraktiven Strahlteiler-Optik (18) nachgeordnete Filter-Optik (21).

11. Bearbeitungsoptik nach einem der vorhergehenden Ansprüche, **dadurch gekennzeichnet, dass** die strahlformende Optik (20) zur Umwandlung eines eintretenden Laserstrahls (12) mit Gauß-förmigem Strahlprofil in einen austretenden Laserstrahl (3) mit einem Bessel-artigen Strahlprofil ausgebildet ist.

12. Bearbeitungsoptik nach einem der vorhergehenden Ansprüche, bei der die strahlformende Optik (20) zur Erzeugung eines nicht-rotationssymmetrischen quasi-nichtbeugenden Strahlprofils ausgebildet ist, das bevorzugt eine Vorzugsrichtung (X) aufweist.

13. Bearbeitungsoptik nach einem der vorhergehenden Ansprüche, bei der die strahlformende Optik (20) als Axicon oder als diffraktives optisches Element ausgebildet ist.

14. Bearbeitungsoptik nach einem der vorhergehenden Ansprüche, weiter umfassend: einen Drehantrieb (24) zum Drehen des doppelbrechenden Polarisator-Elements (1a, 1b) und bevorzugt der Strahlteiler-Optik (18) und/oder der strahlformenden Optik (20) um eine Drehachse (25).

15. Bearbeitungsoptik nach einem der vorhergehenden Anspruche, weiter umfassend: eine polarisationsbeeinflussende Einrichtung (26) zur Erzeugung eines zirkular polarisierten Eingangslaserstrahls (12).

16. Laserbearbeitungsvorrichtung (14), umfassend:
eine Bearbeitungsoptik (6) nach einem der vorhergehenden Ansprüche,
sowie eine Laserquelle (11), insbesondere eine Ultrakurzpuls-Laserquelle (11),
zur Erzeugung eines Laserstrahls (12), insbesondere eines Laserstrahls (12) mit einem Gauß-förmigen Strahlprofil.

17. Verfahren zum Laserbearbeiten eines Werkstücks (9) mittels einer Bearbeitungsoptik (6), umfassend:
Aufteilen mindestens eines Eingangslaserstrahls (12) in ein Paar von senkrecht zueinander polarisierten Teilstrahlen (5a, 5b) an einem doppelbrechenden Polarisator-Element (1a, 1b) der Bearbeitungsoptik (6), sowie Fokussieren der Teilstrahlen (5a, 5b) auf Fokuszonen (13a, 13b), bevorzugt in einer Fokusebene (8), im Bereich des Werkstücks (9) mittels einer Fokussiereinrichtung (7) der Bearbeitungsoptik (6),
**dadurch gekennzeichnet,**
**dass** eine strahlformende Optik (20) der Bearbeitungsoptik (6) einen eintretenden Laserstrahl (12) mit Gauß-förmigem Strahlprofil in einen austretenden Laserstrahl (3) mit einem quasi-nichtbeugenden Strahlprofil umwandelt, wobei die strahlformende Optik (20) im Strahlengang (10) vor dem doppelbrechenden Polarisator-Element (1a, 1b) angeordnet ist, und dass die senkrecht zueinander polarisierten Teilstrahlen (5a, 5b) auf zumindest teilweise überlappende Fokuszonen (13a, 13b) fokussiert werden.

## Claims

1. A processing optics (6) for workpiece processing, comprising:
a birefringent polarizer element (1a, 1b) for splitting at least one input laser beam (12) into a pair of partial beams (5a, 5b) polarized perpendicular to each other, and
focusing optics (7) disposed in the beam path (10) after the polarizer element (1a, 1b) for focusing the partial beams (5a, 5b) onto focus zones (13a, 13b), preferably in a focal plane (8),
**characterized in that**,
the processing optics (6) is designed to generate at least partially overlapping focus zones (13a, 13b) of the partial beams (5a, 5b) polarized perpendicular to each other and that the processing optics (6) comprise a beam-shaping optics (20) for converting an incident laser beam (12) with a Gaussian beam profile into an emerging laser beam (3) with a quasi-non-diffractive beam profile, wherein the beam-shaping optics (20) is disposed in the beam path (10) in front of the birefringent polarizer element (1a, 1b).

2. The processing optics according to claim 1, in which the birefringent polarizer element (1a, 1b) is designed to generate either a spatial offset (Δx) or to generate an angular offset (△α) or to generate a combination of a spatial offset (Δx) and an angular offset (△α) between the two partial beams (5a, 5b) polarized perpendicular to each other.

3. The processing optics according to claim 2, wherein the birefringent polarizer element (1a) is designed to generate an angular offset (△α) and is disposed in a plane (15) optically conjugate to the focal plane (8).

4. The processing optics according to claim 2, wherein the polarizer element (1b) is designed to generate a spatial offset (Δx) and is disposed in the beam path (10) in front of a further, preferably collimating optics (16), wherein the processing optics (6) is designed to map the spatial offset (Δx) between the partial beams (5a, 5b) polarized perpendicular to each other into the focal plane (8).

5. The processing optics according to one of the preceding claims, which are designed to generate a plurality of pairs (19) of at least partially overlapping focus zones (13a, 13b) along a predetermined contour, in particular along a preferred direction (X), in the focal plane (8), wherein focus zones (13a, 13b) of two partial beams (5a, 5b) polarized perpendicular to each other of immediately adjoining pairs (19) at least partially overlap.

6. The processing optics according to claim 5, further comprising: a preferably diffractive beam splitter optics (18) for generating the plurality of pairs (19) of partial beams (5a, 5b) polarized perpendicular to each other.

7. The processing optics according to claim 6, wherein the beam splitter optics (18) are disposed in a plane (15) optically conjugate to the focal plane (8).

8. The processing optics according to claim 7, wherein the beam splitter optics (18) together with the birefringent polarizer element (1a) are disposed in the plane (15) optically conjugate to the focal plane (8).

9. The processing optics according to one of claims 6 to 8, wherein the beam splitter optics (18) are designed as beam-shaping optics for converting an incident laser beam (12) with a Gaussian beam profile into an emerging laser beam (3) with a flat-top beam profile.

10. The processing optics according to one of claims 6 to 9, further comprising: a filter optics (21) arranged downstream of the diffractive beam splitter optics (18).

11. The processing optics according to one of the preceding claims, **characterized in that** the beam-shaping optics (20) are designed for converting an incident laser beam (12) with a Gaussian beam profile into an emerging laser beam (3) with a Bessel-like beam profile.

12. The processing optics according to one of the preceding claims, wherein the beam-shaping optics (20) are designed to generate a non-rotationally symmetrical, quasi-non-diffractive beam profile which preferably has a preferred direction (X).

13. The processing optics according to one of the preceding claims, wherein the beam-shaping optics (20) are designed as an axicon or as a diffractive optical element.

14. The processing optics according to one of the preceding claims, further comprising: a rotary drive (24) for rotating the birefringent polarizer element (1a, 1b) and preferably the beam splitter optics (18) and/or the beam-shaping optics (20) about an axis of rotation (25).

15. The processing optics according to one of the preceding claims, further comprising: a polarization-influencing device (26) for generating a circularly polarized input laser beam (12).

16. A laser processing device (14), comprising:
processing optics (6) according to one of the preceding claims, and a laser source (11), in particular an ultra-short pulse laser source (11), for generating a laser beam (12), in particular a laser beam (12) with a Gaussian beam profile.

17. A method for laser processing a workpiece (9) by means of processing optics (6), comprising:
splitting at least one input laser beam (12) into a pair of partial beams (5a, 5b) polarized perpendicular to each other at a birefringent polarizer element (1a, 1b) of the processing optics (6), and
focusing the partial beams (5a, 5b) on focus zones (13a, 13b), preferably in a focal plane (8), in the area of the workpiece (9) by means of a focusing device (7) of the processing optics (6),
**characterized in that**,
beam-shaping optics (20) of the processing optics (6) converts an incident laser beam (12) with a Gaussian beam profile into an emerging laser beam (3) with a quasi-non-diffractive beam profile, wherein the beam-shaping optics (20) is disposed in the beam path (10) in front of the birefringent polarizer element (1a, 1b), and that the partial beams (5a, 5b) polarized perpendicular to each other are focused onto at least partially overlapping focus zones (13a, 13b).

## Revendications

1. Optique d'usinage (6) pour l'usinage de pièces, comprenant :
un élément polarisateur biréfringent (1a, 1b) pour séparer au moins un faisceau laser entrant (12) en une paire de faisceaux partiels (5a, 5b) polarisés perpendiculairement l'un à l'autre, ainsi que
une optique de focalisation (7) disposée dans le trajet de faisceau (10) en aval de l'élément polarisateur (1a, 1b) pour focaliser des faisceaux partiels (5a, 5b) sur des zones focales (13a, 13b), de préférence dans un plan focal (8),
**caractérisée en ce que**
l'optique d'usinage (6) est conçue pour générer des zones focales (13a, 13b) au moins partiellement superposées des faisceaux partiels (5a, 5b) polarisés perpendiculairement l'un à l'autre, et **en ce que** l'optique d'usinage (6) comprend une optique de mise en forme de faisceau (20) pour transformer un faisceau laser entrant (12) à profil de faisceau gaussien en un faisceau laser sortant (3) à profil de faisceau quasi non-diffractant, dans laquelle l'optique de mise en forme de faisceau (20) est disposée dans le trajet de faisceau (10) en amont de l'élément polarisateur biréfringent (1a, 1b).

2. Optique d'usinage selon la revendication 1, dans laquelle l'élément polarisateur biréfringent (1a, 1b) est conçu soit pour générer un décalage spatial (△x), soit pour générer un décalage angulaire (△α), soit pour générer une combinaison de décalage spatial (△x) et de décalage angulaire (△α) entre les deux faisceaux partiels (5a, 5b) polarisés perpendiculairement l'un à l'autre.

3. Optique d'usinage selon la revendication 2, dans laquelle l'élément polarisateur biréfringent (1a) est conçu pour générer un décalage angulaire (△α) et est disposé dans un plan (15) optiquement conjugué au plan focal (8).

4. Optique d'usinage selon la revendication 2, dans laquelle l'élément polarisateur (1b) est conçu pour générer un décalage spatial (Δx) et est disposé dans le trajet de faisceau (10) en aval d'une autre optique (16), de préférence collimatrice, dans laquelle l'optique d'usinage (6) est conçue pour reproduire le décalage spatial (△x) entre les faisceaux partiels (5a, 5b) polarisés perpendiculairement l'un à l'autre dans le plan focal (8).

5. Optique d'usinage selon l'une des revendications précédentes, qui est conçue pour générer une pluralité de paires (19) de zones focales (13a, 13b) se chevauchant au moins partiellement le long d'un contour prédéfini, en particulier le long d'une direction préférentielle (X), dans le plan focal (8), dans laquelle des zones focales (13a, 13b) de respectivement deux faisceaux partiels (5a, 5b) polarisés perpendiculairement l'un à l'autre de paires (19) directement voisines se chevauchent au moins partiellement.

6. Optique d'usinage selon la revendication 5, comprenant en outre : une optique de séparation de faisceau (18), de préférence diffractive, pour générer la pluralité de paires (19) de faisceaux partiels (5a, 5b) polarisés perpendiculairement les uns aux autres.

7. Optique d'usinage selon la revendication 6, dans laquelle l'optique de séparation de faisceau (18) est disposée dans un plan (15) optiquement conjugué au plan focal (8).

8. Optique d'usinage selon la revendication 7, dans laquelle l'optique de séparation de faisceau (18) est disposée, conjointement avec l'élément polarisateur biréfringent (1a), dans le plan (15) optiquement conjugué au plan focal (8).

9. Optique d'usinage selon l'une des revendications 6 à 8, dans laquelle l'optique de séparation de faisceau (18) est conçue comme optique de mise en forme de faisceau pour transformer un faisceau laser entrant (12) à profil de faisceau gaussien en un faisceau laser sortant (3) à profil de faisceau à sommet plat.

10. Optique d'usinage selon l'une des revendications 6 à 9, comprenant en outre : une optique de filtrage (21) disposée en aval de l'optique de séparation de faisceau (18) diffractive.

11. Optique d'usinage selon l'une des revendications précédentes, **caractérisée en ce que** l'optique de mise en forme de faisceau (20) est conçue pour transformer un faisceau laser entrant (12) à profil de faisceau gaussien en un faisceau laser sortant (3) à profil de faisceau de type Bessel.

12. Optique d'usinage selon l'une des revendications précédentes, dans laquelle l'optique de mise en forme de faisceau (20) est conçue pour générer un profil de faisceau quasi non-diffractant non symétrique en rotation, présentant de préférence une direction préférentielle (X).

13. Optique d'usinage selon l'une des revendications précédentes, dans laquelle l'optique de mise en forme de faisceau (20) est conçue comme un axicon ou comme un élément optique diffractif.

14. Optique d'usinage selon l'une des revendications précédentes, comprenant en outre : un entraînement en rotation (24) pour mettre en rotation l'élément polarisateur biréfringent (1a, 1b) et de préférence l'optique de séparation de faisceau (18) et/ou l'optique de mise en forme de faisceau (20) autour d'un axe de rotation (25).

15. Optique d'usinage selon l'une des revendications précédentes, comprenant en outre : un dispositif influençant la polarisation (26) pour générer un faisceau laser entrant (12) polarisé circulairement.

16. Dispositif d'usinage au laser (14), comprenant :
une optique d'usinage (6) selon l'une des revendications précédentes, ainsi qu'une source laser (11), en particulier une source laser (11) à impulsions ultracourtes, pour générer un faisceau laser (12), en particulier un faisceau laser (12) à profil de faisceau gaussien.

17. Procédé d'usinage au laser d'une pièce (9) au moyen d'une optique d'usinage (6), comprenant :
la séparation d'au moins un faisceau laser entrant (12) en une paire de faisceaux partiels (5a, 5b) polarisés perpendiculairement l'un à l'autre sur un élément polarisateur biréfringent (1a, 1b) de l'optique d'usinage (6), ainsi que
la focalisation des faisceaux partiels (5a, 5b) sur des zones focales (13a, 13b), de préférence dans un plan focal (8), dans la région de la pièce (9) au moyen d'un dispositif de focalisation (7) de l'optique d'usinage (6),
**caractérisé en ce qu'**
une optique de mise en forme de faisceau (20) de l'optique d'usinage (6) transforme un faisceau laser entrant (12) à profil de faisceau gaussien en un faisceau laser sortant (3) à profil de faisceau quasi non-diffractant, dans lequel l'optique de mise en forme de faisceau (20) est disposée dans le trajet de faisceau (10) en amont de l'élément polarisateur biréfringent (1a, 1b), et **en ce que** les faisceaux partiels (5a, 5b) polarisés perpendiculairement l'un à l'autre sont focalisés sur des zones focales (13a, 13b) se chevauchant au moins partiellement.
